# EUROPÄISCHE PATENTSCHRIFT

(11) **EP 0 579 960 B1**
(45) Veröffentlichungstag und Bekanntmachung des Hinweises auf die Patenterteilung: **17.12.1997**
(21) Anmeldenummer: 93109840.4
(22) Anmeldetag: 21.06.1993
(51) Int. Cl.: B60K 41/14

(54) **Einrichtung zur Einstellung eines Getriebe-Abtriebsmoments oder einer Getriebe-Ausgangsleistung bei Fahrzeugen mit kontinuierlich verstellbarem Getriebe (CVT)**
Arrangement for regulating the transmission output torque or the transmission output power in vehicles with continuously variable transmissions
Dispositif pour réguler le couple de sortie de transmission ou la force de sortie de transmission dans des véhicules à transmissions à variation de vitesse continue

(30) Priorität: 21.07.1992 DE 4223967
(43) Veröffentlichungstag der Anmeldung: 26.01.1994
(73) Patentinhaber: ROBERT BOSCH GMBH, 70442 Stuttgart (DE)
(72) Erfinder: Leonhard, Rolf, Dr.-Ing., D-7141 Schwieberdingen (DE); Streib, Martin, Dr., D-7143 Vaihingen/Enz 6 (DE)

(56) Entgegenhaltungen:
- DE-A- 3 439 882
- US-A- 4 653 006
- US-A- 4 720 793
- US-A- 4 875 892
- US-A- 4 893 526
- US-A- 4 945 483

## Beschreibung

### STAND DER TECHNIK

Die Erfindung betrifft eine Einrichtung zur Einstellung eines Getriebe-Abtriebsmoments oder einer Getriebe-Ausgangsleistung bei Fahrzeugen mit einer Brennkraftmaschine und einem kontinuierlich verstellbaren Getriebe (CVT) nach der Gattung der Ansprüche 1 oder 2.

Die Zugkraft, die von den Antriebsrädern eines Kraftfahrzeugs erzeugt wird, ist durch das Drehmoment am Getriebeausgang (Abtriebsmoment) bzw. durch die Getriebe-Ausgangsleistung bestimmt. Dieses Abtriebsmoment wird durch die beiden Größen Getriebeübersetzung und Motormoment bestimmt, wobei hier für die Getriebeübersetzung der wert der Drehmomentübersetzung zu verwenden ist, der bei einem Getriebewirkungsgrad von weniger als 1 von dem der Drehzahlübersetzung verschieden ist. Beim Motormoment ist das vom Motor abgegebene Moment abzüglich aller Nebenleistungen relevant. Bei einem mit einem solchen stufenlosen Getriebe ausgerüsteten Fahrzeug kann somit ein auf Grund des Zugkraftwunsches des Fahrers definiertes Abtriebsmoment alternativ mit beliebig vielen Motormoment-/Übersetzungskombinationen realisiert werden.

Es ist schon vorgeschlagen worden, das Getriebe-Abtriebsmoment direkt dem Pedalwert zuzuorden, was jedoch zu einem großen Pedal-Leerweg und zu einer schlechten Dosierbarkeit bei hohen Geschwindigkeiten führt. Weiterhin ist es bekannt, den Sollwert für das Getriebe-Abtriebsmoment aus der Pedalstellung und der Motordrehzahl zu berechnen. Dies führt jedoch zu einer unerwünschten Rückkopplung bei Änderung der Getriebeübersetzung.

Bei Fahrzeugen mit bekanntem stufenlosem CVT-Getriebe und konventioneller Drosselklappensteuerung (Drosselklappenstellung nur als Funktion des Pedalwerts) wird die Getriebeübersetzung derart an die Pedal- und damit an die Drosselklappenstellung gekoppelt, daß die Übersetzung mit steigendem Pedal- und Drosselklappenwert stetig größer, also kürzer wird, um ein akzeptables Fahrverhalten zu erzielen. Dadurch kann der verbrauchsgünstige Bereich mit niedriger Übersetzung und hohem Motormoment nicht ausgeschöpft werden, und das Fahrzeug wird verbrauchsungünstig in vielen Bereichen betrieben.

In der US 4,720,793 wird eine Einrichtung zur Einstellung eines Getriebeabtriebsmomentes beschrieben, bei dem das gewünschte Getriebeabtriebsmoment abhängig von der Stellung des Fahrpedals und der Fahrzeuggeschwindigkeit ermittelt wird. Zur Einstellung des gewünschte Getriebeabtriebsmomentes wird die Einspritzmenge des Fahrzeugsmotors und die Getriebeübersetzung abhängig von dem gewünschten Getriebeabtriebsmoment bestimmt.

Ebenso wird in der US 4,893,526, die die Merkmale des Oberbegriffs der Ansprüche 1 und 2 beinhaltet, eine Einrichtung zur Einstellung eines Getriebeabtriebsmomentes beschrieben, bei dem das gewünschte Getriebeabtriebsmoment abhängig von der Stellung des Fahrpedals und der Fahrzeuggeschwindigkeit ermittelt wird. Zur Einstellung des gewünschte Getriebeabtriebsmomentes wird eine Soll-Getriebeeingangsdrehzahl gebildet.

Die US 4,945,483 zeigt die Einstellung eines gewünschten Soll-Getriebeabtriebsmoment entweder durch Einstellen einer Soll-Getriebeeingangsdrehzahl oder durch Einstellen einer Soll-Getriebeübersetzung.

### VORTEILE DER ERFINDUNG

Die erfindungsgemäße Einrichtung mit den kennzeichnenden Merkmalen der unabhängigen Ansprüche 1 und 2 hat demgegenüber den Vorteil, daß das Fahrzeug unabhängig vom jeweiligen Pedal- bzw. Drosselklappenwinkel und der jeweiligen Drehzahl im Rahmen der vorgegebenen verbrauchsoptimalen Betriebsstrategie betrieben wird, wobei eine völlige Entkopplung des Drosselklappen- und des Getriebezustands vorliegt. Bei der Charakteristik gängiger Verbrennungsmotoren ist es nämlich in den meisten Fällen zur Verbrauchsoptimierung am günstigsten, ein gegebenes Abtriebsmoment mit möglichst hohem Motormoment und kleiner Übersetzung zu erzeugen. Dies kann erfindungsgemäß in optimaler Weise einfach und individuell an die verschiedenen Verbrennungsmotoren anpaßbar realisiert werden.

Um Brummgeräusche und andere Komfortbeeinträchtigungen, insbesondere bei hohem Motormoment und niedriger Drehzahl, zu vermeiden, können einzelne Kennfeldwerte zur Vermeidung solcher Komfortbeeinträchtigungen auf eine andere als die verbrauchsoptimale Übersetzung eingestellt werden.

Ebenso treten große Pedal-Leerwege, eine schlechte Dosierbarkeit bei hohen Geschwindigkeiten und eine unerwünschte Rückkopplung bei Änderung der Getriebeübersetzung bei der erfindungsgemäßen Einrichtung nicht mehr auf. Darüber hinaus kann alternativ zur Berechnung des Abtriebsmoment-Sollwerts als Funktion der Pedalstellung und der Geschwindigkeit auch ein Leistungswunsch als Funktion der Pedalstellung vorgesehen werden. Im Gegensatz zur Berechnung eines Abtriebsmoment-Sollwerts ist zur Erzielung einer akzeptablen Fahrbarkeit bei der Berechnung eines Leistungs-Sollwerts die Berücksichtigung der Geschwindigkeit nicht unbedingt erforderlich, so daß sich einfachere Verhältnisse ergeben.

Durch die in den Unteransprüchen angegebenen Maßnahmen sind vorteilhafte Weiterbildungen und Verbesserungen der im Anspruch 1 angegebenen Einrichtung möglich.

Bei einem angestrebten verbrauchsgünstigen Fahrverhalten sind die empirisch durch Verbrauchsmessungen in der Applikationsphase ermittelten Kennfeldwerte insbesondere als Stützstellen im Kennfeld enthalten, wobei Zwischenwerte rechnerisch interpoliert werden können. Hierdurch ist in einfacher Weise eine optimale individuelle Anpassung an die jeweilige Brennkraftmaschine und die jeweiligen Umgebungsbedingungen und technischen Auslegungen möglich. Die Kennfeldwerte beinhalten dabei die jeweiligen Werte für die Drehzahlübersetzung des Getriebes.

Der Sollwert der Getriebeübersetzung wird unter Berücksichtigung einer unteren Mindestmotordrehzahl und des vom Fahrer gewünschten Abtriebsmoments zweckmäßigerweise so klein wie möglich gewählt.

Zur Vorgabe des Sollwerts für das Getriebeabtriebsmoment sind vorzugsweise Mittel zur Erzeugung dieses Sollwerts aus der Fahrpedalstellung und der Fahrgeschwindigkeit vorgesehen. Zur Erzeugung optimaler Verhältnisse weisen dabei diese Mittel zur Erzeugung des Sollwerts für das Getriebeabtriebsmoment ein Kennfeld auf.

Falls der Getriebewirkungsgrad eine nennenswerte Abhängigkeit vom Drehmoment und der Drehzahl besitzt, ist in vorteilhafter Weise ein Getriebewirkungsgrad-Kennfeld zur Ermittlung des Getriebewirkungsgrads als Funktion des Getriebeabtriebsmoments und/oder der Drehzahlübersetzung des Getriebes vorgesehen. Hierbei sind insbesondere Mittel zur Berechnung der Drehmomentübersetzung des Getriebes durch Multiplikation der Drehzahlübersetzung des Getriebes mit dem Getriebewirkungsgrad vorgesehen.

Zur Optimierung der Gemischzumessung pro Arbeitstakt für die Brennkraftmaschine sind zweckmäßigerweise entsprechende Mittel vorgesehen, die diese Vorgabe aus der Motordrehzahl und dem Motormoment-Sollwert anhand eines Kennfeldes vornehmen.

### ZEICHNUNG

Ein Ausführungsbeispiel der Erfindung ist in der Zeichnung dargestellt und in der nachfolgenden Beschreibung näher erläutert. Es zeigen:
- Fig. 1: die logische Struktur der elektronischen Steuerung eines mit einer Brennkraftmaschine verbundenen stufenlosen Getriebes und
- Fig. 2: ein Signaldiagramm zur Erläuterung des Zusammenhangs zwischen Pedalstellung und Getriebeübersetzung bzw. Drosselklappenwert.

### BESCHREIBUNG DES AUSFÜHRUNGSBEISPIELS

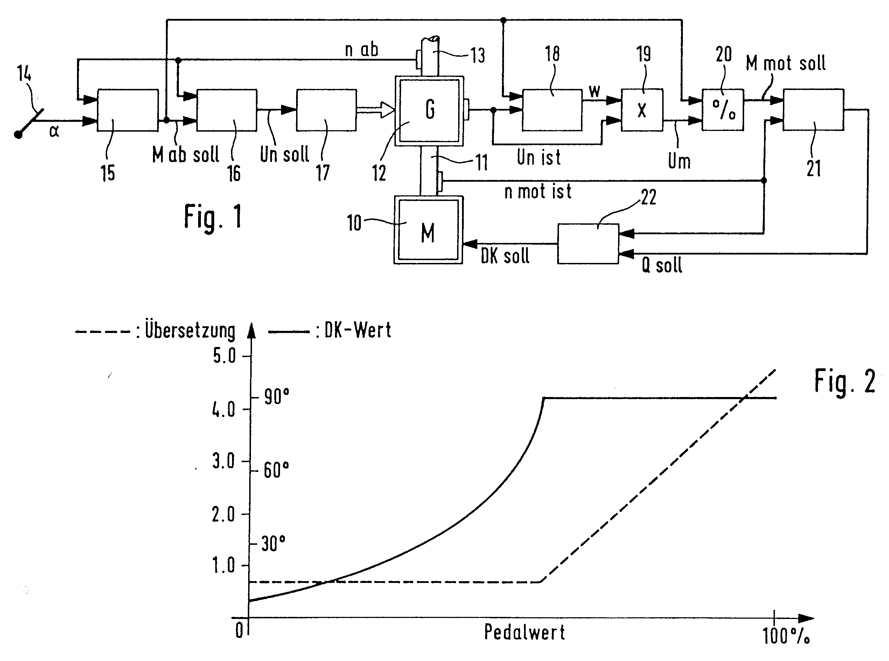

Bei dem in Fig. 1 dargestellten Ausführungsbeispiel sind von einem nicht dargestellten Fahrzeug schematisch eine Brennkraftmaschine 10 und ein mit dieser über eine Antriebswelle 11 verbundenes, kontinuierlich verstellbares bzw. stufenloses Getriebe 12 dargestellt. Eine Abtriebswelle 13 treibt in nicht dargestellter Weise das Fahrzeug über Antriebsräder an.

Die Einstellung der Zugkraft bzw. der Fahrgeschwindigkeit des Fahrzeugs erfolgt seitens eines nicht dargestellten Fahrers über ein Fahrpedal 14. Die Fahrpedalstellung sowie die an der Abtriebswelle 13 erfaßte Abtriebsdrehzahl n ab, die der Fahrgeschwindigkeit proportional ist, wird einer Sollwert-Vorgabestufe 15 für den Sollwert des Getriebeabtriebsmoments M ab soll zugeführt. Diese Sollwertvorgabe kann beispielsweise über ein entsprechendes Kennfeld erfolgen, wobei eine solche Sollwert-Vorgabestufe 15 beispielsweise in der DE 40 37 237 A näher beschrieben ist. Aus diesem Drehmomentsollwert M ab soll und der Abtriebsdrehzahl n ab des Getriebes 12 wird nun in einer Übersetzungs-Steuerstufe 16 der Sollwert U n soll für die Drehzahlübersetzung des Getriebes 12 festgelegt. Hierzu ist in dieser Übersetzungs-Steuerstufe 16 ein Kennfeld enthalten, dessen Kennfeldwerte Drehzahlübersetzungen als Funktion von Abtriebsdrehzahl und Abtriebsmoment beinhalten. Zur Erzeugung dieses Kennfelds wird in der Applikationsphase der elektronischen Steuerung an vorgegebenen Stützstellen von Abtriebsdrehzahl und Abtriebsmoment der Kraftstoffverbrauch bei verschiedenen Motormoment-/Übersetzungskombinationen gemessen. Der ermittelte Wert für die verbrauchsoptimale Getriebeübersetzung wird dann in die jeweilige Stützstelle eingetragen. Hierdurch wird ein verbrauchsoptimales Kennfeld für die Getriebeübersetzung erzeugt. Werte zwischen den einzelnen Stützstellen können dann durch rechnerische Interpolation erzeugt werden. Über diese Sollwertvorgabe U n soll wird dann über einen Aktuator 17, der üblicherweise ein elektrohydraulischer Aktuator ist, die Drehzahlübersetzung im Getriebe 12 verbrauchsoptimal eingestellt.

Der sich ergebende Istwert U n ist für die Drehzahlübersetzung des Getriebes wird nun zusammen mit dem Wert M ab soll einer Wirkungsgrad-Ermittlungsstufe 18 zugeführt, in der der Getriebewirkungsgrad w anhand dieser Größen ermittelt wird, beispielsweise über ein Kennfeld. In einer Multiplizierstufe 19 wird nun der ermittelte Wirkungsgrad w mit dem Istwert der Drehzahlübersetzung U n ist multipliziert, um die Drehmomentübersetzung U m (Drehmomentverhältnis Ausgang/Eingang) zu ermitteln. Falls der Getriebewirkungsgrad keine nennenswerte Moment- und Drehzahlabhängigkeit besitzt, kann die Wirkungsgrad-Ermittlungsstufe 18 selbstverständlich auch entfallen. Weiterhin kann bei einem Wirkungsgrad nahe dem Wert 1 oder in einer einfacheren Ausführung auch die Multiplizierstufe 19 entfallen.

Nun wird in einer Divisionsstufe 20 durch Division des Abtriebsmoment-Sollwerts M ab soll durch die Drehmomentübersetzung U m der Sollwert des Drehmoments am Getriebeeingang berechnet, also der Motormoment-Sollwert M mot soll, der bei starrem Durchtrieb zwischen Motor und Getriebe mit dem Drehmoment-Sollwert am Getriebeeingang identisch ist. Sofern ein Drehmomentwandler zwischengeschaltet sein sollte, so muß noch die Wandlerverstärkung berücksichtigt werden. Dies ist beispielsweise in der DE 41 25 574 A näher beschrieben.

Aus dem Motormoment-Sollwert M mot soll muß nun in der Brennkraftmaschine 10 ein entsprechendes Motormoment erzeugt werden. Möglichkeiten zur Realisierung sind beispielsweise in dem zuvor angegebenen Stand der Technik beschrieben. Eine einfache Realisierung ist in Fig. 1 dargestellt. Aus der Motordrehzahl n mot ist, also der Drehzahl an der Antriebswelle 11 und dem Motormoment-Sollwert M mot soll, wird nun in einer Kennfeld-Steuerstufe 21 aus einem motorspezifischen Kennfeld ein Sollwert Q soll für die Gemischmenge pro Arbeitstakt der Brennkraftmaschine bestimmt. Aus diesem Füllungs-Sollwert wird nun wiederum in Verbindung mit der Motordrehzahl n mot ist in einer weiteren Motorsteuerstufe 22 aus einem ebenfalls motorspezifischen Kennfeld ein Drosselklappen-Sollwert DK soll bestimmt, der dann mittels eines elektronisch gesteuerten Drosselklappenstellers ("elektronisches Gaspedal") in eine entsprechende Stellung umgesetzt wird. Die beiden Kennfelder der KennfeldSteuerstufe 21 und der Motorsteuerstufe 22 lassen sich auch zu einem Kennfeld zusammenfassen, indem der Drosselklappen-Sollwert DK soll als Funktion von Motordrehzahl n mot ist und Motormoment M mot soll steht. Hierdurch kann Rechenzeit und Speichervolumen eingespart werden, allerdings sind Korrekturen, wie z. B. eine Luftdichte-Korrektur, dann schwieriger durchzuführen.

Bei Einspritzmotoren können alternativ und zusätzlich selbstverständlich auch die Einspritzmengen-Sollwerte als Funktion von Motormoment-Sollwert und Motordrehzahl über ein Kennfeld gesteuert werden. Dies trifft auch für Dieselmotoren zu, bei denen das Motormoment in Verbindung mit den entsprechenden Aktuatoren (EDC) durch entsprechendes Ermitteln der Einspritzmengen-Sollwerte gesteuert wird.

In dem in Fig. 2 dargestellten Diagramm ist eine typische Charakteristik gängiger Verbrennungsmotoren dargestellt, bei denen es in den meisten Fällen bezüglich des Kraftstoffverbrauchs am günstigsten ist, ein gegebenes Abtriebsmoment mit möglichst hohem Motormoment und kleiner Übersetzung zu erzeugen. Das entsprechende Kennfeld in der Übersetzungs-Steuerstufe 16 wird in diesen Fällen zu einem Verlauf von Übersetzung und Drosselklappenstellung führen, wie er in Fig. 2 qualitativ dargestellt ist: Mit steigender Abtriebsmoment-Anforderung bleibt zunächst eine sehr kleine Getriebeübersetzung konstant eingestellt, während die Drosselklappenöffnung bis nahe 100 % ansteigt. Wenn das Fahrpedal ungefähr zu 50 % durchgetreten ist, kann ein weiterer Anstieg der Abtriebsmoment-Anforderung nicht mehr durch weiteres Öffnen der Drosselklappe erfolgen, sondern nur noch durch eine Vergrößerung der Übersetzung. Daher steigt ab dieser Stellung die Übersetzung im wesentlichen linear an, bis ein Maximalwert erreicht ist.

Insbesondere bei hohem Motormoment und niedriger Drehzahl können Brummgeräusche und andere Komfortbeeinträchtigungen durch die Brennkraftmaschine 10 oder das Getriebe 12 auftreten. Um dies zu vermeiden, kann das Übersetzungs-Sollwert-Kennfeld in der Übersetzungs-Steuerstufe 16 so modifiziert werden, daß in kritischen Bereichen eine andere als die verbrauchsoptimale Übersetzung eingestellt wird. Zugunsten des Komforts kann also in bestimmten kritischen Bereichen von der verbrauchsoptimalen Einstellung der Übersetzung abgewichen werden.

Anstelle der Einstellung einer verbrauchsoptimalen Übersetzung gemäß den beschriebenen Ausführungsbeispielen kann selbstverständlich auch eine andere Betriebsstrategie für die Brennkraftmaschine vorgesehen sein, z. B. ein sportliches Fahrverhalten, welches zu seiner Optimierung andere Übersetzungswerte erfordert. Diese können dann ebenfalls in einem entsprechend theoretisch oder empirisch ermittelten Kennfeld abgelegt sein.

Anstelle der Vorgabe der Getriebeübersetzung über ein Kennfeld kann die jeweilige Getriebeübersetzung selbstverständlich auch anhand eines entsprechenden Algorithmus berechnet werden. Ein ohnehin vorhandener Rechner bzw. Mikroprozessor kann derartige Rechenvorgänge zur Ermittlung der jeweiligen Getriebeübesetzung übernehmen.

Anstelle der Berechnung bzw. Einstellung des GetriebeAbtriebsmoments als Funktion der Pedalstellung und Geschwindigkeit gemäß dem beschriebenen Ausführungsbeispiel kann prinzipiell auch ein Leistungswunsch am Ausgang des Getriebes als Funktion der Pedalstellung entsprechend realisiert werden. Zur Erzielung einer akzeptablen Fahrbarkeit ist bei der Berechnung eines Leistungs-Sollwerts die Berücksichtigung der Geschwindigkeit nicht unbedingt erforderlich, so daß sich etwas einfachere Verhältnisse ergeben.

## Patentansprüche

1. Einrichtung zur Einstellung eines Getriebe-Abtriebsmoments bei Fahrzeugen mit einer Brennkraftmaschine und einem kontinuierlich verstellbaren Getriebe auf einen vom Fahrer vorgegebenen Wert, mit Mitteln zur Vorgabe eines Sollwerts für das Getriebe-Abtriebsmoment als Funktion der Stellung eines Fahrpedals und der Fahrzeuggeschwindigkeit und mit Mitteln zur Berechnung eines Sollwerts für das Motormoment der Brennkraftmaschine aus dem vom Fahrer vorgegebenen Wert für das Getriebe-Abtriebsmoment und aus dem Istwert der Getriebeübersetzung, dadurch gekennzeichnet, daß Mittel (16) zur Vorgabe eines Sollwerts für die Getriebeübersetzung ein Kennfeld oder einen Berechnungsablauf enthalten, in dem Werte für diese Getriebeübersetzung als Funktion der Getriebe-Abtriebsdrehzahl und der Stellung des Fahrpedals oder des Sollwerts für das Getriebe-Abtriebsmoment gemäß einer vorgebbaren Betriebsstrategie für die Brennkraftmaschine im Sinne eines verbrauchsgünstigen Fahrverhaltens abgespeichert sind oder berechnet werden, wobei einzelne Kennfeldwerte zur Vermeidung von Komfortbeeinträchtigungen auf eine andere als die verbrauchsoptimale Übersetzung eingestellt sind und der Sollwert des Motormoments derart berechnet wird, daß der sich in Verbindung mit dem Istwert der Getriebeübersetzung einstellende Istwert des Getriebe-Abtriebsmoments mit dem vom Fahrer vorgegebenen Sollwert übereinstimmt.

2. Einrichtung zur Einstellung einer Getriebe-Ausgangsleistung bei Fahrzeugen mit einer Brennkraftmaschine und einem kontinuierlich verstellbaren Getriebe auf einen vom Fahrer vorgebbaren Wert, mit Mitteln zur Vorgabe eines Sollwerts für die Ausgangsleistung des Getriebes als Funktion der Fahrpedalstellung und mit Mitteln zur Berechnung eines Sollwerts für das Motormoment der Brennkraftmaschine aus dem vom Fahrer vorgegebenen Wert der Getriebe-Ausgangsleistung und dem Istwert der Getriebeübersetzung, dadurch gekennzeichnet, daß Mittel (16) zur Vorgabe eines Sollwerts für die Getriebeübersetzung ein Kennfeld oder einen Berechnungsablauf enthalten, in dem Werte für diese Getriebeübersetzung als Funktion der Getriebe-Abtriebsdrehzahl und der Stellung des Fahrpedals oder des Sollwerts für das Getriebe-Abtriebsmoment gemäß einer vorgebbaren Betriebsstrategie für die Brennkraftmaschine im Sinne eines verbrauchsgünstigen Fahrverhaltens abgespeichert sind oder berechnet werden, wobei einzelne Kennfeldwerte zur Vermeidung von Komfortbeeinträchtigungen auf eine andere als die verbrauchsoptimale Übersetzung eingestellt sind und der Sollwert des Motormoments derart berechnet wird, daß der sich in Verbindung mit dem Istwert der Getriebeübersetzung einstellende Istwert der Getriebe-Ausgangsleistung mit dem vom Fahrer vorgegebenen Sollwert übereinstimmt.

3. Einrichtung nach einem der vorhergehenden Ansprüche, dadurch gekennzeichnet, daß die empirisch durch Verbrauchsmessungen in der Applikationsphase ermittelten Kennfeldwerte als Stützstellen im Kennfeld enthalten sind.

4. Einrichtung nach Anspruch 3, dadurch gekennzeichnet, daß die Kennfeldwerte Drehzahlübersetzungen für das Getriebe beinhalten.

5. Einrichtung nach einem der vorhergehenden Ansprüche, dadurch gekennzeichnet, daß der Sollwert der Getriebeübersetzung unter Berücksichtigung einer unteren Mindestmotordrehzahl und des vom Fahrer gewünschten Abtriebsmoments so klein wie möglich gewählt wird.

6. Einrichtung nach einem der vorhergehenden Ansprüche, dadurch gekennzeichnet, daß das Getriebe (12) mit einem elektrisch betätigbaren Aktuator (17), insbesondere einem elektrohydraulischen Aktuator, zur Vorgabe der Getriebeübersetzung versehen ist.

7. Einrichtung nach einem der vorhergehenden Ansprüche, dadurch gekennzeichnet, daß Mittel (15) zur Erzeugung des Sollwerts für das Getriebe-Abtriebsmoment aus der Fahrpedalstellung und der Fahrzeuggeschwindigkeit vorgesehen sind.

8. Einrichtung nach Anspruch 7, dadurch gekennzeichnet, daß die Mittel (15) zur Erzeugung des Sollwerts für das Getriebe-Abtriebsmoment ein Kennfeld enthalten.

9. Einrichtung nach einem der vorhergehenden Ansprüche, dadurch gekennzeichnet, daß ein Getriebewirkungsgrad-Kennfeld (18) zur Ermittlung des Getriebewirkungsgrads als Funktion des Getriebe-Abtriebsmoments und/oder der Drehzahlübersetzung des Getriebes vorgesehen ist.

10. Einrichtung nach Anspruch 9, dadurch gekennzeichnet, daß Mittel (19) zur Berechnung der Drehmomentübersetzung des Getriebes (12) durch Multiplikation der Drehzahlübersetzung des Getriebes (12) mit dem Getriebewirkungsgrad (w) vorgesehen sind.

11. Einrichtung nach einem der vorhergehenden Ansprüche, dadurch gekennzeichnet, daß Mittel (21,22) zur Vorgabe der Gemischmenge pro Arbeitstakt für die Brennkraftmaschine (10) aus der Motordrehzahl und dem Motormoment-Sollwert anhand eines Kennfeldes vorgesehen sind.

## Claims

1. Device for setting a transmission output torque in vehicles with an internal combustion engine and a continuously variable transmission to a value prescribed by the driver, having means for prescribing a desired value for the transmission output torque as a function of the position of an accelerator pedal and the vehicle speed, and having means for calculating a desired value for the engine torque of the internal combustion engine from the value, prescribed by the driver, for the transmission output torque and from the actual value of the gear ratio, characterized in that means (16) for prescribing a desired value for the gear ratio contain an engine characteristics map or a computing cycle, in which values for this gear ratio are stored or calculated as a function of the transmission output speed and of the position of the accelerator or of the desired value for the transmission output torque in accordance with a prescribable management strategy for the internal combustion engine for the purpose of running the vehicle favourably in terms of consumption, it being the case that individual values of the engine characteristics map are set, for the purpose of avoiding losses of comfort, to a ratio different from the optimum ratio for consumption, and that the desired value of the engine torque is calculated in such a way that the actual value of the transmission output torque which is produced in conjunction with the actual value of the transmission ratio corresponds to the desired value prescribed by the driver.

2. Device for setting a transmission output power in vehicles with an internal combustion engine and a continuously variable transmission to a value prescribable by the driver, having means for prescribing a desired value for the output power of the transmission as a function of the accelerator pedal position, and having means for calculating a desired value for the engine torque of the internal combustion engine from the value, prescribed by the driver, of the transmission output power and the actual value of the gear ratio, characterized in that means (16) for prescribing a desired value for the gear ratio contain an engine characteristics map or a computing cycle, in which values for this gear ratio are stored or calculated as a function of the transmission output speed and of the position of the accelerator pedal or of the desired value for the transmission output torque in accordance with a prescribable management strategy for the internal combustion engine for the purpose of running the vehicle favourably in terms of consumption, it being the case that individual values of the engine characteristics map are set, for the purpose of avoiding losses of comfort, to a ratio different from the optimum ratio for consumption, and that the desired value of the engine torque is calculated in such a way that the actual value of the transmission output power which is produced in conjunction with the actual value of the gear ratio corresponds to the desired value prescribed by the driver.

3. Device according to one of the preceding claims, characterized in that the values of the engine characteristics map determined empirically by consumption measurements in the application phase are contained in the engine characteristics map as interpolation points.

4. Device according to Claim 3, characterized in that the values of the engine characteristics map include speed ratios for the transmission.

5. Device according to one of the preceding claims, characterized in that the desired value of the gear ratio is selected to be as small as possible taking account of a lower minimum engine speed and of the output torque desired by the driver.

6. Device according to one of the preceding claims, characterized in that the transmission (12) is provided with an electrically operable actuator (17), in particular an electrohydraulic actuator, for prescribing the gear ratio.

7. Device according to one of the preceding claims, characterized in that means (15) are provided for generating the desired value for the transmission output torque from the accelerator pedal position and the vehicle speed.

8. Device according to Claim 7, characterized in that the means (15) for generating the desired value for the transmission output torque contain an engine characteristics map.

9. Device according to one of the preceding claims, characterized in that a transmission efficiency map (18) is provided for determining the transmission efficiency as a function of the transmission output torque and/or the speed ratio of the transmission.

10. Device according to Claim 9, characterized in that means (19) are provided for calculating the torque conversion of the transmission (12) by multiplying the speed ratio of the transmission (12) by the transmission efficiency (w).

11. Device according to one of the preceding claims, characterized in that means (21, 22) are provided for prescribing the mixture quantity per combustion cycle for the internal combustion engine (10) from the engine speed and the desired value of the engine torque with the aid of an engine characteristics map.

## Revendications

1. Dispositif pour régler le couple de sortie de transmission, dans des véhicules équipés d'un moteur à combustion interne et d'une transmission à variation de vitesse continue, sur une valeur prédéfinie par le conducteur, avec des moyens pour définir au préalable une valeur de consigne du couple de sortie de transmission en fonction de la position de la pédale d'accélérateur et de la vitesse du véhicule, et avec des moyens servant à calculer une valeur de consigne du couple du moteur à combustion interne à partir de la valeur prédéfinie par le conducteur pour le couple de sortie de transmission et à partir de la valeur réelle de démultiplication de la transmission ,
caractérisé en ce que
les moyens (16), qui servent à définir au préalable une valeur de consigne pour la démultiplication de la transmission, contiennent un champ caractéristique ou un déroulement de calcul dans lequel sont mises en mémoire ou calculées des valeurs pour cette démultiplication de la transmission en fonction de la vitesse de rotation de sortie de transmission et de la position de la pédale d'accélérateur ou de la valeur de consigne du couple de sortie de transmission, selon une stratégie de marche que l'on peut définir au préalable, pour le moteur à combustion interne, dans le sens d'un mode de conduite qui soit favorable pour la consommation de carburant, des valeurs individuelles de champ caractéristique pour éviter d'affecter le confort de marche du véhicule, étant réglées sur une autre démultiplication que la démultiplication optimale pour la consommation de carburant, et la valeur de consigne du couple moteur étant calculée d'une manière telle que la valeur réelle du couple de sortie de transmission, qui s'établit en liaison avec la valeur réelle de la démultiplication de transmission, coïncide avec la valeur de consigne définie au préalable par le conducteur.

2. Dispositif pour le réglage de la puissance de sortie de transmission dans le cas de véhicules équipés d'un moteur à combustion interne et d'une transmission à variation de vitesse continue, sur une valeur prédéfinie par le conducteur, avec des moyens pour définir au préalable une valeur de consigne de la puissance de sortie de transmission en fonction de la position de la pédale d'accélérateur, et avec des moyens servant à calculer une valeur de consigne pour le couple moteur du moteur à combustion interne à partir de la valeur prédéfinie par le conducteur pour la puissance de sortie de transmission et à partir de la valeur réelle de démultiplication de la transmission,
caractérisé en ce que
les moyens (16), qui servent à définir au préalable une valeur de consigne pour la démultiplication de la transmission, contiennent un champ caractéristique ou un déroulement de calcul dans lequel sont mises en mémoire ou calculées, des valeurs pour cette démultiplication de la transmission en fonction de la vitesse de rotation de sortie de transmission et de la position de la pédale d'accélérateur ou de la valeur de consigne du couple de sortie de transmission, selon une stratégie de marche que l'on peut définir au préalable, pour le moteur à combustion interne, dans le sens d'un mode de conduite qui soit favorable à la consommation de carburant, des valeurs individuelles de champ caractéristique pour éviter d'affecter le confort de marche du véhicule, étant réglées sur une autre démultiplication que la démultiplication optimale pour la consommation de carburant, et la valeur de consigne du couple moteur étant calculée d'une manière telle que la valeur réelle de la puissance de sortie de transmission, qui s'établit en liaison avec la valeur réelle de la démultiplication de transmission, coïncide avec la valeur de consigne définie au préalable par le conducteur.

3. Dispositif selon l'une des revendications précédentes,
caractérisé en ce que
les valeurs de champ caractéristique, déterminées de façon empirique par des mesures de consommation dans la phase d'application, sont contenues dans le champ caractéristique en tant que points d'appui.

4. Dispositif selon la revendication 3,
caractérisé en ce que
les valeurs de champ caractéristique contiennent des démultiplications de la vitesse de rotation pour la transmission.

5. Dispositif selon l'une des revendications précédentes,
caractérisé en ce que
la valeur de consigne de la démultiplication de transmission est choisie aussi petite que possible en prenant en considération une vitesse de rotation minimale inférieure du moteur et le couple de sortie souhaité par le conducteur.

6. Dispositif selon l'une des revendications précédentes,
caractérisé en ce que
la transmission (12) est pourvue d'un actionneur (17), qui peut être commandé électriquement, en particulier d'un actionneur hydroélectrique, servant à prédéfinir la démultiplication de transmission.

7. Dispositif selon l'une des revendications précédentes,
caractérisé en ce que
il est prévu des moyens (15) pour produire la valeur de consigne du couple de sortie de transmission à partir de la position de la pédale d'accélérateur et de la vitesse du véhicule.

8. Dispositif selon la revendication 7,
caractérisé en ce que
les moyens (15), qui servent à produire la valeur de consigne du couple de sortie de transmission, contiennent un champ caractéristique.

9. Dispositif selon l'une des revendications précédentes,
caractérisé en ce que
il est prévu un champ caractéristique (18) du rendement de transmission qui sert à déterminer le rendement de la transmission en fonction du couple de sortie de transmission et/ou de la démultiplication de la vitesse de rotation de la transmission.

10. Dispositif selon la revendication 9,
caractérisé en ce que
il est prévu des moyens (19) pour calculer la démultiplication du couple de rotation de la transmission (12) en multipliant la démultiplication de la vitesse de rotation de transmission (12), par le rendement de la transmission (w).

11. Dispositif selon l'une des revendications précédentes,
caractérisé en ce que
il est prévu des moyens (21, 22) pour définir au préalable la quantité de carburant par cycle de travail, qui est nécessaire au moteur à combustion interne (10), à partir de la vitesse de rotation du moteur et de la valeur de consigne du couple moteur, en utilisant un champ caractéristique.
